# EUROPÄISCHE PATENTSCHRIFT

(11) **EP 1 680 906 B1**
(45) Veröffentlichungstag und Bekanntmachung des Hinweises auf die Patenterteilung: **02.01.2008**
(21) Anmeldenummer: 04818143.2
(22) Anmeldetag: 29.10.2004
(51) Int. Cl.: H04L 29/06, H04Q 7/32

(54) **AUTHENTIZITÄT UND AKTUALITÄT VON SITZUNGSSCHLÜSSEL-GENERIERUNGEN ZWISCHEN EINEM DIENSTE-NETZKNOTEN UND MINDESTENS EINEM KOMMUNIKATIONSENDGERÄT MIT EINER IDENTIFIKATIONSKARTE**
AUTHENTICATION AND UPDATE OF THE GENERATION OF SESSION KEYS BETWEEN A SERVICE NETWORK NODE AND AT LEAST ONE COMMUNICATIONS TERMINAL WITH THE AID OF AN IDENTIFICATION CARD
AUTHENTIFICATION ET ACTUALISATION DE GENERATIONS DE CLES DE SESSION ENTRE DES NOEUDS RESEAU DE SERVICES ET AU MOINS UN APPAREIL DE COMMUNICATION A L'AIDE D'UNE CARTE D'IDENTIFICATION

(30) Priorität: 06.11.2003 DE 10352350
(43) Veröffentlichungstag der Anmeldung: 19.07.2006
(73) Patentinhaber: SIEMENS AKTIENGESELLSCHAFT, 80333 München (DE)
(72) Erfinder: BLOMMAERT, Marc, B-9140 Temse (BE)
(86) Internationale Anmeldenummer: PCT/EP2004/052715
(87) Internationale Veröffentlichungsnummer: WO 2005/046162

(56) Entgegenhaltungen:
- WO-A1-02/052784
- MBMS SECURITY RAPPORTEUR: "Latest Version of MBMS TS (33.246v0.2.1)" 3GPP TSG SA WG3 SECURITY - S3, 30, [Online] 10. Oktober 2003 (2003-10-10), XP002315613 POVOA DE VARZIM, PORTUGAL Gefunden im Internet: URL:http://www.3gpp.org/ftp/tsg_sa/WG3_Sec urity/TSGS3_30_Povoa/Docs/PDF/S3-030517.pd f> [gefunden am 2005-01-27]
- ARKKO J. ET AL: "MIKEY: Multimedia Internet KEYing" IETF, DRAFT, Juni 2003 (2003-06), XP015002814
- SIEMENS: "MBMS Key distribution" 3GPP TSG SA WG3 SECURITY - S3, 30, [Online] Oktober 2003 (2003-10), XP002315615 POVOA DE VARZIM, PORTUGAL Gefunden im Internet: URL:http://www.3gpp.org/ftp/tsg_sa/WG3_Sec urity/TSGS3_30_Povoa/Docs/PDF/S3-030586.pd f> [gefunden am 2005-01-27]
- PERRIG ET AL: "Tesla: Multicast Source Authentication Transformation Introduction" IETF, DRAFT, [Online] Oktober 2002 (2002-10), XP002315614 Gefunden im Internet: URL:http://www.ietf.org/proceedings/03nov/ I-D/draft-ietf-msec-tesla-intro-01.txt> [gefunden am 2005-01-28] in der Anmeldung erwähnt
- "Security of Multimedia Broadcast/Multicast Service (MBMS)" 3GPP TS 33.246 VERSION 6.1.0 RELEASE 6, [Online] Dezember 2004 (2004-12), XP002315616 Gefunden im Internet: URL:http://webapp.etsi.org/exchangefolder/ ts_133246v060100p.pdf> [gefunden am 2005-01-27] in der Anmeldung erwähnt

## Beschreibung

Die Erfindung betrifft ein Verfahren und eine Vorrichtung zum Überprüfen, ob von einem Dienste-Netzknoten über ein Kommunikationsnetz an ein Kommunikatiorisendgerät gesandte Daten eines Dienstes von einer vertrauenswürdigen Quelle stammen.

Das Dokument D1 (MBMS Security Rapporteur: "Zatest Version of MBMS TS (33.246v0.2.1)" 3GPP TSG SA WG3 Security - S3, 30, [Online] 10. Oktober 2003 (2003-10-10), XP002315613 Povoa De Varzim, Portugal) beschreibt Sicherheits-Prozeduren von Multimedia Broadcast/Multicast-Diensten (MBMS) für 3GPP Systeme (UTRAN und GERAN). MBMS ist ein Dienst, der über das GPRS Netz bereitgestellt wird und verschiedenste Applikationen übertragen kann. Die verwendete Schutzmethode kann dabei von der Applikation, die mit Hilfe von MBMS übertragen wird, abhängig sein.

Das Dokument D2 (Arkko J. et. Al.: MIKEY: Multimedia Internet KEYing" IETF, Draft, Juni 2003 (2003-06), XP015002814) beschreibt Sicherheitsprotokolle für Echtzeit Multimedia Applikation. Damit eine Unterstützung dieser Protokolle stattfinden kann, besteht die Notwendigkeit für eine Schlüssel-Management-Lösung. Es wird ein Schlüssel-Management Schema für Echtzeit-Applikationen (sowohl für eine peer-to-peer Kommunikation als auch für eine Gruppen-Kommunikation) vorgeschlagen, das zusammen mit Protokollen wie SIP und RTSP funktioniert. Teilweise wird auch das SRTP verwendet.

Bei Diensten, speziell bei so genannten Multicast-Diensten in einem Kommunikationsnetz, wie zum Beispiel dem multimedialen MBMS-Dienst (MBMS = Multimedia Broadcast/Multicast Service), dem Herunterladen von Video-, Audio-, Bild- und Spieledaten, etc., kann nicht garantiert werden, dass nur solche Nutzer Zugang zu diesen Diensten haben, die auch dafür bezahlt haben. Bei Multicast-Diensten werden Daten des Dienstes an mehrere Empfänger einer Gruppe von Nutzern gesendet. Der Zugang zu solchen Diensten bzw. Daten, zum Beispiel Videodaten, kann so geregelt sein, dass nur Nutzer, die einen Sitzungsschlüssel (Session Key) zum Entschlüsseln der Daten generieren können, die Daten auch nutzen können. Eine solche Methode besteht darin, dass ein Zugangsschlüssel (key BAK = Broadcast access key) sicher auf eine Identifikationskarte (smartcard) eines Nutzers übermittelt wird. Eine Identifikationskarte kann zum Beispiel eine SIM- (Subscriber Identity Module), eine USIM- (Universal Subscriber Identity Module) oder Ähnliches sein.

Möchte der Nutzer Daten eines Dienstes nutzen, so wird ein Sitzungsschlüssel unter Verwendung des Zugangsschlüssels auf der Identifikationskarte und einer Zufallszahl generiert. Die Sitzungsschlüssel werden im Kommunikationsendgerät des Nutzers benutzt. Dabei kann ein Kommunikationsendgerät ein Mobilfunkendgerät, ein Handheld-Gerät, ein mobiler Computer oder Ähnliches sein. Der Zugangsschlüssel wird sicher auf der Identifikationskarte verwahrt und verbleibt ausschließlich auf dieser Karte. Die Zufallszahl ist in den übertragenen Daten enthalten und ermöglicht eine schnelle Sitzungsschlüssel-Generierung. Die vorgestellte Methode für die Sitzungsschlüssel-Generierung hat allerdings keine Möglichkeit zu überprüfen, ob zum einen die empfangenen Daten und zum anderen die Zufallszahl zum Generieren des Sitzungsschlüssels von einer vertrauenswürdigen Quelle bzw. Dienste-Netzknoten kommen.

Nachdem die gleichen Sitzungsschlüssel von vielen potentiell nicht vertrauenswürdigen Nutzern mit Endgeräten für die Nutzung der Daten eines Dienstes generiert werden können, kann nur gewährleistet werden, dass ein nicht wohldefinierter Integritätsschutz von diesen Sitzungsschlüsseln nur garantieren kann, dass die Daten eines Dienstes von einem Mitglied der Gruppe kommen, nämlich von einem, der einen Zugangsschlüssel erhalten hat. Eine solche Methode setzt voraus, dass alle Nutzer in der Gruppe vertrauenswürdig sind. Wenn jedoch die Sitzungsschlüssel von einem arglistigen Nutzer außerhalb der Gruppe verteilt werden, kann die Authentifizierungsquelle und die Einrichtung (setup) des Dienstes zum Verteilen von arglistigen bzw. geändertem Content gefälscht werden. So könnte es zum Beispiel sein, dass ein arglistiger Nutzer mit einem Kommunikationsendgerät den Sitzungsschlüssel und die Zufallszahl von abgehenden Daten eines Dienstes aufzeichnet, diese Information an eine nicht vertrauenswürdige Quelle weiterleitet, die anschließend beabsichtigt, die Information zusammen mit arglistigem Content zu nutzen. Die nicht vertrauenswürdige Quelle könnte einen Dienst anbieten, indem sie vorgibt eine Basisstation (BTS) oder ein Radio-Netzwerk-Controller (RNC) zu sein. Die nicht vertrauenswürdige Quelle nutzt dabei eine Schwachstelle des Kommunikationsnetzes oder typische Charakteristiken des unterstützenden Dienstes aus. So hat zum Beispiel ein UMTS-Mobilfunknutzer die Möglichkeit, Daten eines Dienstes im RRC-IDLE-Modus zu empfangen, was bedeutet, dass das Kommunikationsendgerät nicht mit dem Netzwerk über eine authentifizierte Punkt-zu-Punkt-Verbindung verbunden sein muss. Ein anderes Beispiel könnte sein, dass ein arglistiger Nutzer eines Kommunikationsendgerätes beginnt, viele Sitzungsschlüssel auf Basis von eigenen Zufallszahlen zu berechnen, gerade bevor der aktuelle Dienst gestartet wurde. Die Berechnung der Sitzungsschlüssel kann ab dem Erhalt des Zugangsschlüssels auf der Identifikationskarte gestartet werden. Dadurch kann die nicht vertrauenswürdige Quelle mit dem Senden der Daten vor dem Beginn des Sendens der Daten durch den Dienst beginnen. Die Risiken, dass solche Attacken stattfinden, steigt mit der Anzahl der potentiellen Nutzer eines Dienstes. So könnten während eines Fußballspiels die Zuschauer, die sich über die Spielergebnisse weiterer Spiele in diesem Moment informieren möchten, mit falschem Content informiert werden.

In der Spezifikation 3GPP TS 33.246 (3G Security; Security of Multimedia Broadcast/Multicast Service (MBMS) Release 6) werden die Anforderungen für einen Integritätsschutz (integrity protection) für Daten eines Dienstes diskutiert. Jedoch kommt die Spezifikation zur Auffassung, dass nicht vertrauenswürdige Nutzer eine Garantie für einen Integritätsschutz, der auf Sitzungsschlüssel, die in einem Kommunikationsendgerät abgelegt sind, basiert, unmöglich machen, da, wie schon gezeigt, Nutzer als Daten-Quelle agieren können. Maßnahmen zum Integritätsschutz bei Daten eines Dienstes in einem Kommunikationsnetz haben zusätzlich negative Effekte bei der Qualität des Dienstes (QoS = Quality of Service), da jeder Residuum-Bit-Fehler bei den empfangenen Daten auf der Applikations-Seite zu einer Abnahme der Datenpakete wegen des Fehlens einer Integritätsüberprüfung führen wird. Die Verwendung eines Integritätsschutzes in einem Kommunikationsnetz sollte sorgfältig gehandhabt werden. Auch wurde bislang nicht an einen selektiven Schutz für die Sitzungsschlüssel-Zufallszahl (RAND) gedacht. Ein Grund dafür könnte sein, dass hier keine vermeintliche Bedrohung festzustellen ist. Ein Vorschlag für die Quellen-Authentifikation bei Multicast-Diensten, jedoch ohne Verwendung einer Identifikationskarte, wird in dem IETF-Entwurf (draft) http://www.ietf.org/internet-drafts/draft-ietf-msec-tesla-intro-01.txt vorgestellt.

Aufgabe der vorliegenden Erfindung ist es, einen einfachen und effizienten Schutz der Integrität und Aktualität von Sitzungsschlüsseln für empfangene Dienste-Daten vorzuschlagen.

Die Aufgabe wird erfindungsgemäß jeweils durch die Gegenstände der unabhängigen Patentansprüche gelöst. Weiterbildungen der Erfindung sind in den Unteransprüchen angegeben.

Zugangsschlüssel zur Entschlüsselung bzw. Generierung von Sitzungsschlüsseln können sicher auf einer Identifikationskarte durch die physikalische Sicherheit einer solchen Karte gespeichert werden.

Zunächst übermittelt ein Dienste-Netzknoten über ein Kommunikationsnetz einen Zugangsschlüssel und einen Sequenzwert an ein Kommunikationsendgerät. Dies kann über eine sichere Verbindung geschehen. Der Sequenzwert ist dabei ein Zahlenwert bzw. ein Zähler, der bei jeder Übertragung weitergezählt werden kann. Zugangsschlüssel und Sequenzwert werden auf der Identifikationskarte gespeichert. Bei Beginn eines Dienstes berechnet der Dienste-Netzknoten einen Gültigkeitswert. Ein Dienste-Netzknoten kann dabei ein Dienste-Server oder ähnlicher Netzknoten in einem Kommunikationsnetz sein. Berechnet wird dieser Gültigkeitswert aus einer Zufallszahl, einen weiteren Sequenzwert (vorzugsweise größer als der auf der Identifikationskarte gespeicherte Sequenzwert), den Zugangsschlüssel, und bevorzugt unter Verwendung einer Zerstückelungsfunktion (keyed hash function). Die zu versendenden Daten werden mit einem vom Dienste-Netzknoten generierten Sitzungsschlüssel verschlüsselt. Zusammen mit den verschlüsselten Daten kann dann der Gültigkeitswert, die Zufallszahl, der weitere Sequenzwert und eine Zugangsschlüssel-Identifikation zur richtigen Adressierung des zu verwendenden Zugangsschlüssels an mindestens ein Kommunikationsendgerät versandt werden. Beim Empfang der Daten mit den Werten werden die enthaltenen Werte vom empfangenden Kommunikationsendgerät an die Identifikationskarte weitergeleitet. Die Identifikationskarte berechnet unter Verwendung des weiteren Sequenzwertes, des Zugangsschlüssels sowie der vom Dienste-Netzknoten gesendeten Zufallszahl einen eigenen Gültigkeitswert unter Verwendung der gleichen Funktion, die auch vom Dienste-Netzknoten für die Berechnung seines Gültigkeitswertes verwendet wurde. Nach der Berechnung werden die beiden Gültigkeitswerte von der Identifikationskarte verglichen. Ist dieser Wert identisch, so wird ein positives Vergleichsergebnis erstellt. Ebenfalls werden der auf der Identifikationskarte gespeicherte und der vom Dienste-Netzknoten empfangene Sequenzwert miteinander verglichen. Ist der empfangene Sequenzwert größer als der auf der Identifikationskarte gespeicherte Wert, so wird ein positives Vergleichsergebnis erstellt. Ein von der Identifikationskarte generierter Sitzungsschlüssel wird nur dann an das Kommunikationsendgerät weitergeleitet, wenn beide Vergleichsergebnisse positiv sind. Ein Vorteil dieser Erfindung besteht darin, dass einfach und wirkungsvoll überprüft werden kann, ob die Zufallszahl und der Sequenzwert aktuell und "frisch" sind. Außerdem hat die Erfindung keinerlei Auswirkung auf die Qualität des Dienstes (Quality of Service), da nur die Sitzungsschlüssel-Generierung geschützt ist. Schließlich kann durch dieses Schema noch gewährleistet werden, dass die Daten eines Dienstes nur von einer vertrauenswürdigen Quelle stammen können. Die vorgeschlagene Lösung kann in verschiedenen Umgebungen mit verschiedensten Diensten implementiert werden.

Die Erfindung wird anhand eines in einer Figur dargestellten Ausführungsbeispiels näher erläutert. Dabei zeigen
- Figur 1: ein Flussdiagramm für den erfindungsgemäßen Empfang von Daten eines Dienstes,
- Figur 2: die Berechnung und den Vergleich der Gültigkeitswerte,
- Figur 3: ein Flussdiagramm für den Vergleich der Sequenzwerte,
- Figur 4: eine vereinfachte Darstellung einer Identifikationskarte mit einem Speicherelement,
- Figur 5: eine vereinfachte Darstellung eines Dienste-Netzknotens.

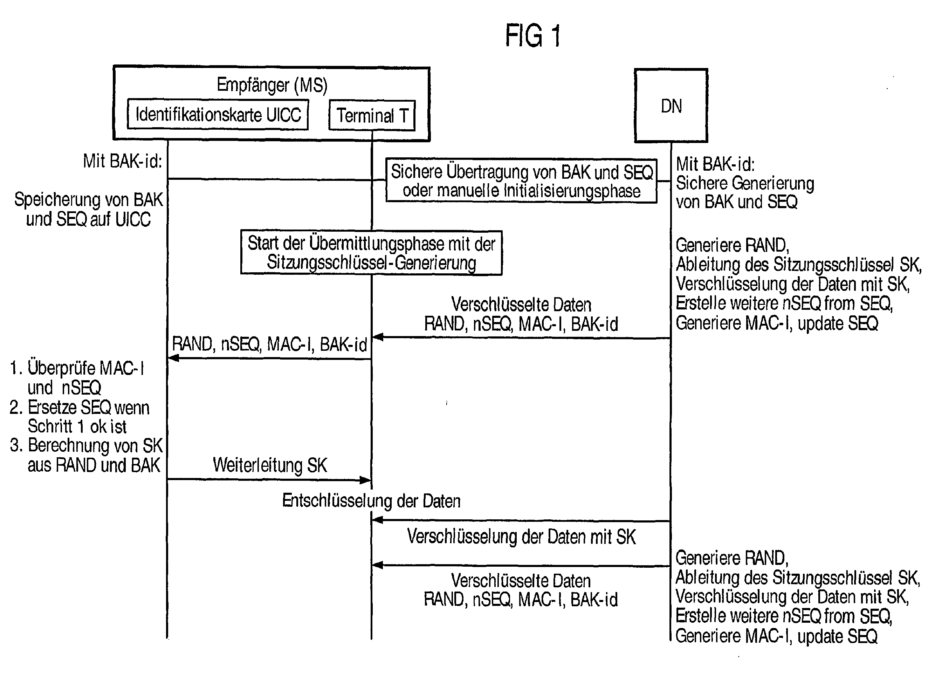

Figur 1 zeigt, wie in einem ersten Schritt mindestens ein Zugangsschlüssel (BAK) und ein Sequenzwert SEQ von einem Dienste-Netzknoten DN an eine Identifikationskarte UICC zum Speichern übermittelt werden. Der Zugangsschlüssel hat eine Zugangsschlüssel-Identifikation, die später benutzt wird um den für den Dienst richtigen Zugangsschlüssel auf der Identifikationskarte zu adressieren. Ein Kommunikationsendgerät MS kann ein Mobilfunkendgerät, ein Handheld, ein mobiler Computer oder ein ähnliches Kommunikationsendgerät sein. Die Übermittlung der Werte kann über eine sichere Verbindung, zum Beispiel über einen speziellen Tunnel, geschehen. Zugangsschlüssel (BAK-E, BAK-I) werden in einem Dienste-Netzknoten DN generiert. Der Zugangsschlüssel BAK-I wird für den Integritätsschutz benutzt und hat die gleiche Lebenszeit wie der Zugangsschlüssel BAK-E, der für die Verschlüsselung benutzt wird. Alternativ könnte nur ein Zugangsschlüssel BAK an die Identifikationskarte übermittelt werden. Dann könnten die Zugangsschlüssel BAK-I und BAK-E aus dem Zugangsschlüssel BAK mit Hilfe einer passenden kryptographischen Funktion abgeleitet werden. Der Zugangsschlüssel BAK-E wird zum Generieren des Sitzungsschlüssels, mit dem die Daten eines Dienstes verschlüsselt werden, verwendet. Und der Zugangsschlüssel BAK-I wird zum Überprüfen, ob die Zufallszahl(en) RANDs und der weitere Sequenzwert nSEQ von einer gültigen (vertrauenswürdigen) Quelle stammen und nicht im Datenstrom modifiziert wurden, benutzt. Für einen Dienst könnten mehrere Zugangsschlüssel BAK auf der Identifikationskarte UICC existieren.

Wenn Daten eines Dienstes von einem Dienste-Netzknoten DN über ein Kommunikationsnetz an mindestens ein Kommunikationsendgerät MS gesendet werden sollen, generiert der Dienste-Netzknoten zunächst eine Zufallszahl RAND und damit einen Sitzungsschlüssel (session key) zum Verschlüsseln der Daten. Anstatt der Verwendung einer Zufallszahl RAND könnte auch der Sitzungsschlüssel SK verschlüsselt mit dem Zugangsschlüssel BAK-E zum empfangenden Kommunikationsendgerät MS gesendet werden. Ein Kommunikationsnetz kann dabei ein zellulares Mobilfunknetz sein. Der Dienste-Knoten DN erstellt einen weiteren Sequenzwert nSEQ, nSEQ = x, und berechnet zusammen mit der verwendeten Zufallszahl RAND und den an die Identifikationskarte gesandten Zugangsschlüssel BAK-I einen Gültigkeitswert MAC-I. Für die Berechnung des Gültigkeitswertes MAC-I wird vorzugsweise eine verschlüsselte Zerstückelungsfunktion (keyed hash function) KHF verwendet.

Zusammen mit den verschlüsselten Daten eines Dienstes werden die Zufallszahl RAND, die Zugangsschlüssel-Identifikation BAK-ID, der weitere Sequenzwert nSEQ und der berechnete Gültigkeitswert MAC-I vom Dienste-Netzknoten DN an das Kommunikationsendgerät MS gesendet. Bei diesen Werten kann keine Aussage über den zu verwendenden Sitzungsschlüssel für das Entschlüsseln der Daten eines Dienstes gemacht werden.

Das Kommunikationsendgerät MS reicht den neuen Sequenzwert nSEQ, die Zufallszahl RAND, die Zugangsschlüssel-Identifikation BAK-ID und den vom Dienste-Netzknoten DN berechneten Gültigkeitswert MAC-I an die Identifikationskarte UICC weiter. Die Identifikationskarte UICC kann aufgrund der Zugangsschlüssel-Identifikation BAK-ID den richtigen Zugangsschlüssel zuordnen und berechnet einen eigenen Gültigkeitswert SD-MAC-I unter Verwendung des weiteren Sequenzwertes nSEQ, des gespeicherten Zugangsschlüssels BAK-I, der erhaltenen Zufallszahl RAND und der gleichen Funktion, mit der der Gültigkeitswert MAC-I im Dienste-Netzknoten berechnet wurde. Anschließend werden die beiden Gültigkeitswerte SD-MAC-I und MAC-I miteinander verglichen. Sind sie identisch, wird ein positives Vergleichsergebnis erstellt. Danach wird verglichen, ob der neue Sequenzwert nSEQ größer ist, als der auf der Identifikationskarte UICC gespeicherte Sequenzwert SEQ. Ist der Wert größer, so wird ein positives Vergleichsergebnis erstellt. Der gespeicherte Sequenzwert SEQ wird danach durch den weiteren Sequenzwert nSEQ ersetzt. Um die Sicherheit zu gewährleisten, sollte der Sequenzwert bzw. Zähler SEQ vom Dienste-Netzknoten DN immer erhöht und niemals auf einen früheren Zählerstand zurückgesetzt werden. Wird der maximale Wert des Sequenzwertes nSEQ erreicht, kann der Zugangsschlüssel BAK nicht mehr verwendet werden. Zum Fortfahren des Dienstes muss dann ein neuer Zugangsschlüssel BAK erstellt und benutzt werden. Der von der Identifikationskarte UICC generierte Sitzungsschlüssel SK wird nur an das Terminal T des Kommunikationsendgerätes weitergegeben, wenn beide Vergleichsergebnisse positiv sind. Bei dem erneuten Senden von Daten eines Dienstes vom Dienste-Netzknoten DN wird dieser Prozess wiederholt.

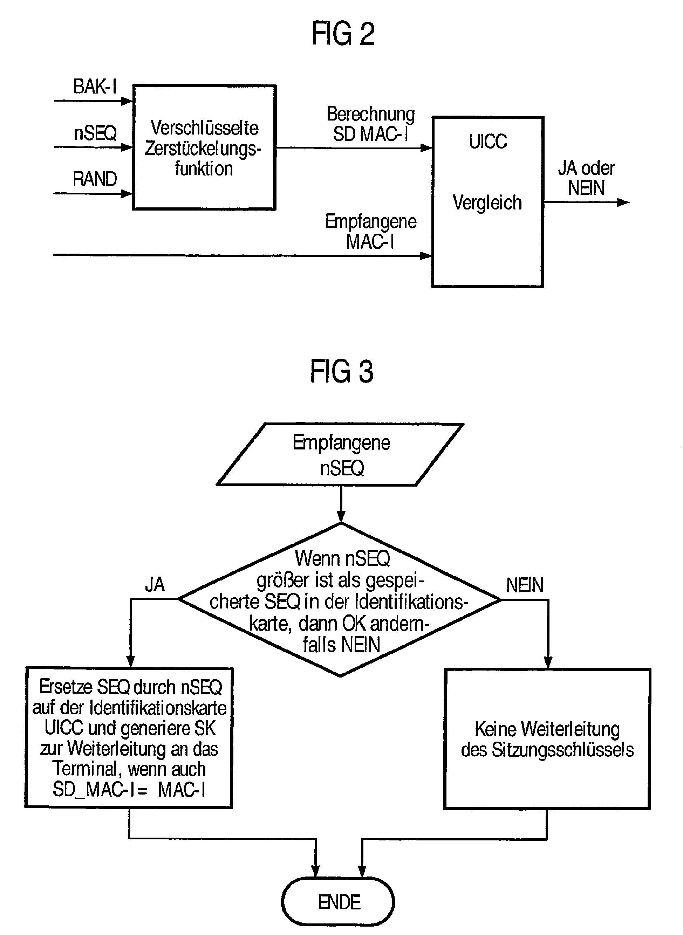

Figur 2 zeigt, wie der Gültigkeitswert SD-MAC-I unter Verwendung des weiteren Sequenzwertes nSEQ, des gespeicherten Zugangsschlüssels BAK-I, der erhaltenen Zufallszahl RAND und der gleichen Funktion, mit der der Gültigkeitswert MAC-I im Dienste-Netzknoten berechnet wurde, in der Identifikationskarte UICC berechnet wird und mit dem vom Dienste-Netzknoten DN berechneten Gültigkeitswert MAC-I verglichen wird. Danach wird ein Vergleichsergebnis erstellt.

Figur 3 zeigt, wie ein vom Dienste-Knoten DN empfangener weiterer Sequenzwert nSEQ mit dem auf der Identifikationskarte UICC gespeicherten Sequenzwert SEQ verglichen wird. Ist der weitere Sequenzwert nSEQ größer, als der auf der Identifikationskarte UICC gespeicherte Sequenzwert SEQ, so wird ein positives Vergleichsergebnis erstellt. Außerdem wird der Sequenzwert SEQ durch den weiteren Sequenzwert nSEQ auf der Identifikationskarte UICC ersetzt. Der Sitzungsschlüssel SK wird an das Terminal T des Kommunikationsendgerätes MS gesendet, wenn die Vergleichsergebnisse aus Figur 2 und 3 positiv sind.

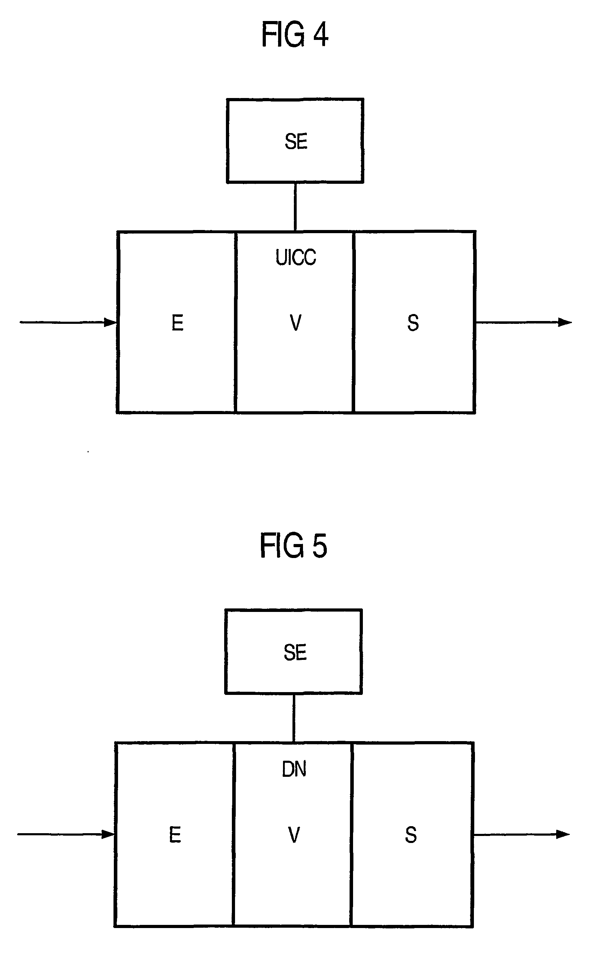

Figur 4 zeigt eine Identifikationskarte UICC mit einer Empfangseinheit E zum Empfangen mindestens eines Sequenzwertes SEQ und mindestens eines Zugangsschlüssels BAK-I zum Speichern in einem Speicherelement SE und zum Empfangen eines weiteren Sequenzwertes nSEQ, einer Zufallszahl RAND und eines Gültigkeitswertes MAC-I von einem Dienste-Netzknoten DN. Die Empfangseinheit E leitet die Werte an eine Verarbeitungseinheit V weiter. Die Verarbeitungseinheit V wird zum Erstellen der Vergleichsergebnisse gemäß Figur 1, 2 und 3 und zum Generieren eines Sitzungsschlüssels SK zum Entschlüsseln der vom Kommunikationsendgerät MS empfangenen Daten eines Dienstes benutzt. Die Sendeeinheit S leitet den generierten Sitzungsschlüssel SK danach an das Terminal T des Kommunikationsendgerätes weiter.

Figur 5 zeigt einen Dienste-Netzknoten, der gemäß Figur 1 den Gültigkeitswert MAC-I in einer Verarbeitungseinheit V berechnet, die Sequenzwerte SEQ und nSEQ bestimmt und mit einer Sendeeinheit S Werte gemäß Figur 1 zusammen mit den verschlüsselten Daten eines Dienstes an ein Kommunikationsendgerät MS versendet.

## Patentansprüche

1. Verfahren zum Generieren eines Sitzungsschlüssels zum Entschlüsseln von von einem Dienste-Netzknoten (DN) über ein Kommunikationsnetz an mindestens ein Kommunikationsendgerat (MS) gesandten Daten eines Dienstes, **dadurch gekennzeichnet, dass** mindestens ein von dem Dienste-Netzknoten (DN) gesendeter Zugangsschlüssel (BAK-I) und mindestens ein gesendeter Sequenzwert (SEQ) in einer Identifikationskarte (UICC) eines Kommunikationsendgerätes (MS) gespeichert werden,
dass ein Gültigkeitswert (MAC-I) im Dienste-Netzknoten (DN) berechnet und zusammen mit den Daten eines Dienstes und einem weiteren Sequenzwert (nSEQ) an das Kommunikationsendgerät (MS) versandt wird,
dass nach dem Empfang der Daten der empfangene Gültigkeitswert (MAC-I) mit einem in der Identifikationskarte (UICC) berechneten Gültigkeitswert (SD-MAC-I) verglichen wird,
dass in der Identifikationskarte (UICC) der empfangene weitere Sequenzwert (nSEQ) mit dem auf der Identifikationskarte (UICC) gespeicherten Sequenzwert (SEQ) verglichen wird und
dass nur bei Vorliegen eines positiven Vergleichsergebnisses des Vergleichs der beiden Gültigkeitswerte (MAC-I/SD-MAC-I) und der beiden Sequenzwerte (SEQ/nSEQ) ein von der Identifikationskarte (UICC) generierter Sitzungsschlüssel für das Entschlüsseln der Daten eines Dienstes an das Terminal (T) des Kommunikationsendgerätes (MS) weitergeleitet wird.

2. Verfahren nach Anspruch 1,
**dadurch gekennzeichnet,**
**dass** nach positivem Vergleich der beiden Sequenzwerte (SEQ/nSEQ) der Sequenzwert (SEQ) in der Identifikationskarte (UICC) durch den Wert des empfangenen weiteren Sequenzwertes (nSEQ) ersetzt wird.

3. Verfahren nach einem der vorhergehenden Ansprüche,
**dadurch gekennzeichnet,**
**dass** der mit den verschlüsselten Daten gesendete weitere Sequenzwert (nSEQ) größer ist, als der auf der Identifikationskarte (UICC) gespeicherte Sequenzwert (SEQ).

4. Verfahren nach einem der vorhergehenden Ansprüche,
**dadurch gekennzeichnet,**
**dass** nur dann ein positives Vergleichsergebnis vorliegt, wenn der weitere Sequenzwert (nSEQ) größer ist als der gespeicherte Sequenzwert (SEQ) in der Identifikationskarte (UICC)

5. Verfahren nach einem der vorhergehenden Ansprüche,
**dadurch gekennzeichnet,**
**dass** der Gültigkeitswert (MAC-I) im Dienste-Netzknoten unter Verwendung des weiteren Sequenzwertes (nSEQ), einer Zufallszahl (RAND), des Zugangsschlüssels (BAK-I) und überdies vorzugsweise unter Verwendung einer Zerstückelungsfunktion (KHF) berechnet wird.

6. Verfahren nach einem der vorhergehenden Ansprüche,
**dadurch gekennzeichnet,**
**dass** die Berechnung des Gültigkeitswertes (SD-MAC-I) in der Identifikationskarte (UICC) unter Verwendung der gleichen Werte (nSEQ, RAND, BAK-I) und der gleichen Funktion, wie die Berechnung des Gültigkeitswertes (MAC-1) im Dienste-Netzknoten (DN) erfolgt, erfolgt.

7. Verfahren nach einem der vorhergehenden Ansprüche,
**dadurch gekennzeichnet,**
**dass** mit den verschlüsselten Daten eine Zugangsschlüssel-Identifikation (BAK-ID) zur Adressierung des für die Daten des Dienstes benötigten Zugangsschlüssels (BAK-I) gesendet wird.

8. Verfahren nach einem der vorhergehenden Ansprüche,
**dadurch gekennzeichnet,**
**dass** das Kommunikationsnetz ein zellulares Mobilfunknetz ist.

## Claims

1. Method for generating a session key for decrypting the data for a service, transmitted via a communications network by a service network node (DN) to at least one communication terminal device (MS),
**characterised in that**
at least one access key (BAK-I) and at least one sequence value (SEQ), transmitted from a service network node (DN), are stored in an identification card (UICC) of a communication terminal device (MS),
a validity value (MAC-I) is calculated in the service network node (DN) and, together with the data for the service and a follow-on sequence value (nSEQ), is transmitted to the communication terminal device (MS),
after the data has been received, the validity value (MAC-I) which has been received is compared with a validity value (SD-MAC-I) calculated in the identification card (UICC),
in the identification card (UICC), the follow-on sequence value (nSEQ) which has been received is compared with the sequence value (SEQ) stored on the identification card (UICC), and
if there are positive comparison results for the comparisons of the two validity values (MAC-I/SD-MAC-1) and the two sequence values (SEQ/nSEQ), then a session key for the decryption of the data for a service, generated by the identification card (UICC), is forwarded to the terminal (T) of the communication device (MS).

2. Method in accordance with claim 1,
**characterised in that**
after a positive comparison of the two sequence values (SEQ/nSEQ), the sequence value (SEQ) in the identification card (UICC) is replaced by the follow-on sequence value which has been received (nSEQ).

3. Method in accordance with one of the preceding claims,
**characterised in that** the follow-on sequence value (nSEQ) sent with the encrypted data is greater than the sequence value (SEQ) stored on the identification card (UICC).

4. Method in accordance with one of the preceding claims,
**characterised in that**
there is only a positive comparison result if the follow-on sequence value (nSEQ) is greater than the stored sequence value (SEQ) in the identification card (UICC).

5. Method in accordance with one of the preceding claims,
**characterised in that**
the calculation of the validity value (MAC-I) in the service network node is made using the follow-on sequence value (nSEQ), a random number (RAND), the access key (BAK-I) and, moreover, preferably using a keyed hash function (KHF).

6. Method in accordance with one of the preceding claims,
**characterised in that**
the calculation of the validity value (SD-MAC-I) in the identification card (UICC) is made using the same values (nSEQ, RAND, BAK-I) and the same function as used in the calculation of the validity value (MAC-I) in the service network node (DN).

7. Method in accordance with one of the preceding claims,
**characterised in that**
an access key identifier (BAK-ID), for use in addressing the access key (BAK-I) required for the data for the service, is transmitted with the encrypted data.

8. Method in accordance with one of the preceding claims,
**characterised in that**
the communications network is a cellular mobile radiocommunication network.

## Revendications

1. Procédé de génération d'une clé de session afin de décrypter les données d'un service qui sont envoyées sur un réseau de communication par un noeud de réseau de service (DN) à au moins un appareil de communication (MS), **caractérisé en ce que**
- au moins une clef d'accès (BAK-I), envoyée par le noeud de réseau de service (DN), et au moins une valeur de séquence envoyée (SEQ) sont mémorisées dans une carte d'identification (UICC) d'un appareil de communication (MS),
- une valeur de validité (MAC-I) est calculée dans le noeud de réseau de service (DN) et est envoyée à l'appareil de communication (MS) conjointement avec les données d'un service et une autre valeur de séquences (nSEQ),
- 1a valeur de validité reçue (MAC-I) est comparée à une valeur de validité (SD-MAC-I), calculée dans la carte d'identification (UICC), après la réception des données,
- l'autre valeur de séquence reçue (nSEQ) est comparée dans la carte d'identification (UICC) à la valeur de séquence (SEQ), mémorisée dans la carte d'identification (UICC), et
- une clé de session, générée par la carte d'identification ((UICC) et destinée à déchiffrer les données d'un service, n'est transmise au terminal (T) de l'appareil de communication (MS) qu'en présence d'un résultat de comparaison positif de la comparaison entre les deux valeurs de validité (MAC-I/SD-MAC-I) et les deux valeurs de séquence (SEQ/nSEQ).

2. Procédé selon la revendication 1, **caractérisé en ce que** la valeur de séquence (SEQ) dans la carte d'identification (UICC) est remplacée par la valeur de l'autre valeur de séquence reçue (nSEQ) après une comparaison positive entre les deux valeurs de séquence (SEQ/nSEQ).

3. Procédé selon l'une des revendications précédentes, **caractérisé en ce que** l'autre valeur de séquence (nSEQ), envoyée avec les données cryptées, est supérieure à la valeur de séquence (SEQ) mémorisée sur la carte d'identification (UICC).

4. Procédé selon l'une des revendications précédentes, **caractérisé en ce que** l'on n'a un résultat de comparaison positif que lorsque l'autre valeur de séquence (nSEQ) est supérieure à la valeur de séquence mémorisée (SEQ) dans la carte d'identification (UICC).

5. Procédé selon l'une des revendications précédentes, **caractérisé en ce que** la valeur de validité (MAC-I) dans le noeud de réseau de service est calculée en utilisant l'autre valeur de séquence (nSEQ), un nombre aléatoire (RAND), la clé d'accès (BAK-I) et surtout avantageusement en utilisant une fonction de morcellement.

6. Procédé selon l'une des revendications précédentes, **caractérisé en ce que** le calcul de la valeur de validité (SD-MAC-I) est effectué dans la carte d'identification (UICC) en utilisant les mêmes valeurs (nSEQ, RAND, BAK-I) et la même fonction que pour calculer la valeur de validité (MAC-I) dans le noeud de réseau de service (DN).

7. Procédé selon l'une des revendications précédentes, **caractérisé en ce qu'**une identification de clé d'accès (BAK-ID) est envoyée avec les données cryptées pour adresser la clé d'accès (BAK-I) nécessaire aux données du service.

8. Procédé selon l'une des revendications précédentes, **caractérisé en ce que** le réseau de communication est un réseau de téléphonie mobile cellulaire.
